# EUROPÄISCHE PATENTSCHRIFT

(11) **EP 0 373 639 B1**
(45) Veröffentlichungstag und Bekanntmachung des Hinweises auf die Patenterteilung: **17.03.1993**
(21) Anmeldenummer: 89123075.7
(22) Anmeldetag: 14.12.1989
(51) Int. Cl.: F02B 37/02, F02B 27/04

(54) **Abgasleitungssystem für eine aufgeladene Brennkraftmaschine**
Exhaust gas conduit system for a supercharged combustion engine
Système de conduits de gaz d'échappement pour un moteur suralimenté

(30) Priorität: 14.12.1988 DE 3841983
(43) Veröffentlichungstag der Anmeldung: 20.06.1990
(73) Patentinhaber: Klöckner-Humboldt-Deutz Aktiengesellschaft, 51149 Köln (DE)
(72) Erfinder: Schorn, Norbert, Dr., D-7758 Meersburg (DE); Stock, Hugo, D-5060 Bergisch Gladbach 2 (DE); Bartels, Richard, D-5216 Niederkassel-Mondorf (DE); Fendel, Willi, D-5000 Köln 50 (DE)

(56) Entgegenhaltungen:
- EP-A- 0 207 443
- DE-A- 3 216 433
- DE-A- 3 329 961
- DE-B- 1 068 513
- DE-C- 842 873
- FR-A- 1 172 170
- GB-A- 127 300
- GB-A- 563 749
- US-A- 2 406 656

## Beschreibung

Die Erfindung betrifft ein Abgasleitungssystem für eine aufgeladene Brennkraftmaschine nach dem Oberbegriff des Anspruchs 1.

Die DE-A-3 329 961 beschreibt ein Abgasleitungssystem für eine von einem Abgasturbolader aufgeladene Brennkraftmaschine mit einem modulartig zusammengesetzten Abgassammelrohr, welches den Turbolader mit Abgas speist und an alle Zylinder einer Zylinderreihe über Anschlußleitungen angeschlossen ist, wobei das Abgassammelrohr an seinem turbinenfernen Ende geschlossen ist, die einzelnen Module identisch ausgeführt sind, die Anschlußleitungen über eine diffusorförmige Eintrittsöffnung in das Abgassammelrohr einmünden, die engste Stelle der diffusorförmigen Eintrittsöffnung im Inneren der Anschlußleitung angeordnet ist und die Begrenzungswände der Anschlußleitungen eine stetige Krümmung aufweisen.

In der DE-A-32 16 433 ist ein Abgasleitungssystem für eine nach dem Stauprinzip aufgeladene Brennkraftmaschine beschrieben. Die Abgasleitung ist hierbei nicht modulartig zusammengesetzt. Die in Strömungsrichtung vor der diffusorförmigen Eintrittsöffnung in der Abgasleitung angeordnete Verengung ist nicht in die Kanalwand integriert. Dadurch bilden sich leicht Wirbel, die zu einer unerwünschten Behinderung des Abgasstroms führen. Weiterhin weisen die Begrenzungswände der Anschlußleitungen keine sich über die gesamte Länge der Anschlußleitung erstreckende stetige Krümmung auf. Erst durch eine stetige Krümmung gelangt das Abgas verlustfrei in die Abgasleitung.

Der Erfindung liegt die Aufgabe zugrunde, ein Abgasleitungssystem für eine aufgeladene Brennkraftmaschine zu schaffen, welches die kinetische Energie des Abgases möglichst verlustarm zum Antrieb des Turboladers ausnutzt.

Erfindungsgemäß wird diese Aufgabe durch die kennzeichnenden Merkmale des Anspruchs 1 gelöst.

Dadurch, daß in Strömungsrichtung vor der Eintrittsöffnung im Abgassammelrohr eine Verengung angeordnet ist, die Verengung rampenförmig über ihre gesamte Länge geradlinig, stetig steigend ausgebildet ist und in die Kanalwand integriert ist, wird die kinetische Energie des Abgases verlustarm zum Antrieb des Turboladers ausgenutzt.

Weitere Merkmale der Erfindung ergeben sich aus der Beschreibung und den Zeichnungen, die eine Ausführungsform der Erfindung zeigen und im nachfolgenden näher beschrieben sind.

Es zeigt:

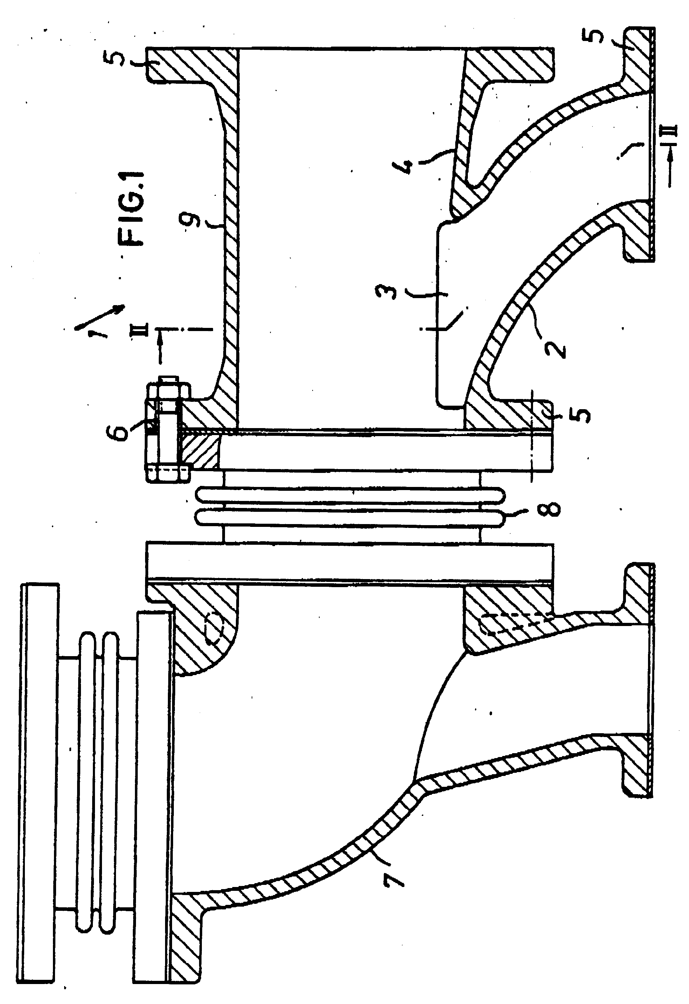

Figur 1: Einen Längsschnitt durch einen Teil des erfindungsgemäßen Abgasleitungssystems,

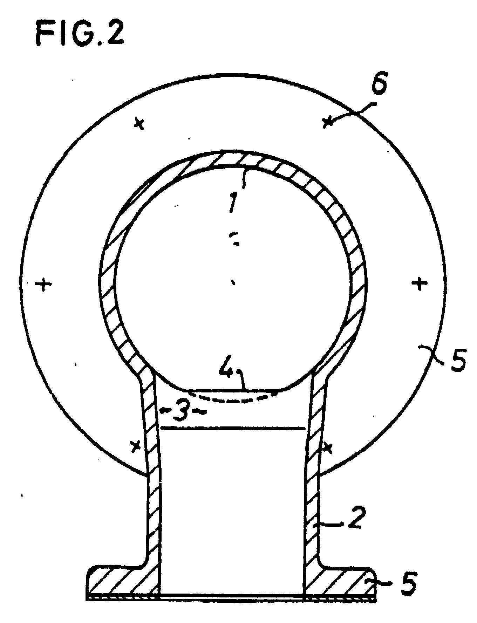

Figur 2: einen Schnitt durch das Abgassammelrohr gemäß der Figur 1 nach der Linie II-II

Das in den Figuren dargestellte Abgasleitungssystem erstreckt sich zwischen einer aufgeladenen, nicht dargestellten mehrzylindrigen Brennkraftmaschine und einem ebenfalls nicht dargestellten, seinem Aufbau nach an sich bekannten Abgasturbolader. Die nicht gezeigten Abgasauslässe der Brennkraftmaschine sind über Anschlußleitungen 2 mit einer an den Turbineneintritt der Turbine des Abgasturboladers angeschlossenen Abgassammelleitung 1 verbunden. Das Abgassammelrohr 1 ist hierbei modulartig zusammengesetzt, wobei in der Figur nur ein Modul 9 und der Anschlußstutzen 7 an den Turbolader gezeigt ist. Das Abgassammelrohr 1 ist an seinem turbinenfernen Ende geschlossen und weist über seine gesamte Länge einen nahezu konstanten Querschnitt auf. Die einzelnen Module können direkt oder über Verbindungsflansche 8 miteinander verbunden sein. Die Anschlußleitungen 2 weisen einen konstanten Querschnitt auf, der sich vor der Eintrittsöffnung 3 in das Abgassammelrohr 1 diffusorförmig erweitert. Diese diffusorförmige Ausgestaltung der Eintrittsöffnung 3 ragt erfindungsgemäß in die Anschlußleitung 2 hinein und zwar vorteilhafterweise ca. 2 cm. Außerdem mündet die Anschlußleitung 2 in Strömungsrichtung der Abgase in das Abgassammelrohr 1 ein.

Erfindungsgemäß ist in Strömungsrichtung direkt vor der Eintrittsöffnung 3 eine Verengung 4 angeordnet, die rampenförmig ausgebildet ist. Diese rampenförmige Verengung 4 ist über ihre gesamte Länge geradlinig, stetig steigend ausgebildet. Der engste Querschnitt des Abgassammelrohrs 1 befindet sich unmittelbar in Strömungsrichtung vor der Eintrittsöffnung 3 der Anschlußleitung 2 in das Abgassammelrohr 1. Hierdurch bildet sich vor der Eintrittsöffnung ein leichter Stau, wodurch in Verbindung mit der diffusorförmigen Ausbildung der Eintrittsöffnung 3 der Abgasstrom verbessert ist.

An der der Eintrittsöffnung 3 gegenüberliegenden Seite des Abgassammelrohrs ist dieses geradlinig ausgebildet. Damit die einzelnen Module 9 bzw. die Anschlußleitung 2 an die benachbarten Module bzw. an die Verbindungsstücke angeschlossen werden können, sind die Enden der jeweiligen Module 9 mit Flanschen 5 versehen, in denen vorteilhafterweise Bohrungen 6 angeordnet sind.

Der Anschlußstutzen 7 der Module bzw. des Abgassammelrohrs 1 mit der Ladeturbine des Abgasturboladers ist als Eckstück mit einer 90-Grad-Krümmung ausgebildet. Die in dieses Eckstück einmündende Anschlußleitung weist keine wie in den Modulen 9 erfindungsgemäß vorgesehene diffusorförmige Eintrittsöffnung auf. Es ist auch in Strömungsrichtung vor dieser Eintrittsöffnung keine rampenförmige Verengung angeordnet.

## Patentansprüche

1. Abgasleitungssystem für eine von einem Abgasturbolader aufgeladene Brennkraftmaschine mit einem modulartig zusammengesetzten Abgassammelrohr (1), welches den Turbolader mit Abgas speist und an alle Zylinder einer Zylinderreihe über Anschlußleitungen (2) angeschlossen ist, wobei das Abgassammelrohr (1) an seinem turbinenfernen Ende geschlossen ist, die einzelnen Module (9) identisch ausgeführt sind, die Anschlußleitungen (2) über eine diffusorförmige Eintrittsöffnung (3) in das Abgassammelrohr (1) einmünden, die engste Stelle der diffusorförmigen Eintrittsöffnung (3) im Inneren der Anschlußleitung (2) angeordnet ist und die Begrenzungswände der Anschlußleitungen (2) eine stetige Krümmung aufweisen,
*dadurch gekennzeichnet,* daß in Strömungsrichtung vor der Eintrittsöffnung im Abgassammelrohr (1) eine Verengung (4) angeordnet ist und die Verengung (4) rampenförmig über ihre gesamte Länge geradlinie, stetig steigend ausgebildet ist und in die Kanalwand integriert ist.

## Claims

1. An exhaust gas conduit system for a combustion engine charged by an exhaust gas turbocharger having a modular exhaust gas collector pipe (1) which feeds the turbocharger with exhaust gas and which is connected to all the cylinders of a row of cylinders via supply pipes (2), wherein the exhaust gas collector pipe (1) is closed at that end distal to the turbine, the individual modules (9) are identical, the supply pipes (2) open via a diffuser-forming entrance port (3) into the exhaust gas collector pipe (1), the narrowest point of the diffuser-forming entrance port (3) is arranged within the supply pipe (2) and the boundary walls of the supply pipes (2) have a continuous curvature,
characterised in that a constriction (4) is arranged in the exhaust gas collector pipe (1) in the direction of flow in front of the entrance port and that the constriction (4) is sloping and linear along its entire length, continually rising and integrated into the channel wall.

## Revendications

1. Système de conduits de gaz d'échappement pour un moteur à combustion interne suralimenté par une turbosoufflante à gaz d'échappement, avec un tube collecteur des gaz d'échappement (1) assemblé de façon modulaire, qui alimente le turbocompresseur de suralimentation en gaz d'échappement et est raccordé à tous les cylindres d'une rangée de cylindre par des conduits de liaison (2), système dans lequel le tube collecteur des gaz d'échappement (1) est formé à son extrémité éloignée de la turbine, les modules individuels (9) sont réalisés de façon identique, les conduits de liaison débouchent dans le tube collecteur des gaz d'échappement (1) par une ouverture d'entrée (3) en forme de diffuseur, l'endroit le plus étroit de l'ouverture d'entrée (3) en forme de diffuseur est située à l'intérieur du conduit de liaison (2) et les parois de délimitation des conduits de liaison (2) ont une courbure régulière, système caractérisé en ce qu'un rétrécissement (4) est disposé dans le sens du courant avant l'ouverture d'entrée dans le tube collecteur des gaz d'échappement (1) et le rétrécissement (4) est réalisé en forme de rampe sur toute sa longueur, en montant régulièrement et il est intégré dans la paroi du canal.
